(19) Europäisches Patentamt
European Patent Office
Office européen des brevets

(11) **EP 4 401 356 A1**

(12) **EUROPEAN PATENT APPLICATION**

(43) Date of publication:
**17.07.2024 Bulletin 2024/29**

(21) Application number: **23151546.1**

(22) Date of filing: **13.01.2023**

(51) International Patent Classification (IPC):
*H04L 9/08* (2006.01)     *H04L 9/14* (2006.01)

(52) Cooperative Patent Classification (CPC):
**H04L 9/0825; H04L 9/0869; H04L 9/14**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Gurulogic Microsystems Oy**
**20100 Turku (FI)**

(72) Inventor: **KÄRKKÄINEN, Tuomas**
**20230 Turku (FI)**

(74) Representative: **Papula Oy**
**P.O. Box 981**
**00101 Helsinki (FI)**

Remarks:
Amended claims in accordance with Rule 137(2) EPC.

(54) **METHODS AND ARRANGEMENTS FOR MAKING A USER DEVICE UTILIZE A SECRET**

(57) A user device may utilize a secret in cryptographically protected communications and/or cryptographic authentication of data. A communications part is configured to forward a secret received from a trusted external source to a key generator. The key generator is configured to use said secret as a cryptographic seed to generate one or more keys and to store said one or more keys in a key storage. A communications encrypter and decrypter part is configured to retrieve said one or more keys from said key storage and to use said one or more keys to cryptographically protect communications performed through said communications part.

Fig. 2

**Description**

**FIELD OF THE INVENTION**

The invention concerns generally the technical field of security needed in using digital services in communications between digital devices. In particular, the invention concerns the task of establishing a secret in a user device for use in such communications without necessarily having to rely upon inherent features of the user device. Examples of such a secret include but are not limited to encryption keys and signing keys of a user.

**BACKGROUND OF THE INVENTION**

Security in digital communications involves multiple aspects such as confidentiality (only authorized parties can access a piece of information), authentication (a communicating party must be sure who they are communicating with), integrity (a piece of information has not been unallowably modified), and non-repudiation (a party cannot successfully deny having sent a certain piece of information). All such aspects of security must ultimately build upon a secret piece of digital information, usually referred to concisely as the secret. To provide sufficient security against breaking attempts, the secret must be derived from randomness.

Digital devices operate deterministically in accordance with the laws of nature, which makes it challenging to have them produce any kind of true randomness. For the sake of verifiable information confidentiality and protection, it is important to be aware of and verify how and where the randomness in question has originated. In theory, randomness can be seemingly correct and even tested by various randomness-testing methods, but if it is produced deterministically based on a computational or logical function whose variables can be manipulated or predicted in some way, it may be possible for a malicious party to break it through modelling or brute force. For this reason, instead of pseudo-randomness, various methods based on true randomness have been developed. An example of such a method involves collecting randomness from a data stream outside the computing unit, such as naturally occurring noise for example, which is difficult to predict.

The widely used PKI (Public Key Infrastructure) technology is a good example of how secrets are used for secure digital communications. A communicating device may randomly generate a secret key and use a mathematical algorithm to derive a corresponding public key. The last-mentioned may be distributed freely and used to encrypt communications directed to said device. As the device in question is the only one to know the secret key, nobody else can decrypt such encrypted communications. The device may also use its secret key to digitally sign outgoing transmissions, so that others may verify the proper originator by successfully using the corresponding public key. A necessary prerequisite for trust in such a case is that sufficient randomness was originally involved in generating the secret key so that malicious parties cannot guess it using publicly available information.

Examples of algorithms involved in the generation and use of secret and public keys are for example RSA (Rivest-Shamir-Adleman), DSA (Digital Signature Algorithm), and ECC (Elliptic Curve Cryptography). As examples, if the last-mentioned is used, the secret key is called the $URT_{SK}$, the public key is called the $URT_{PK}$, and an algorithm called the Curve25519 may be used to derive the public key from the secret key.

As an example of a use case, one may assume digital communications between parties A and B, of which A is a centrally operated digital service and B is an individual user. The equipment of party A may have been assembled and programmed by A themselves and verified for secure operation by a trusted neutral instance C. As a result, the ability of the equipment to randomly generate a secret for party A for use in the communications can be trusted. Party B, on the other hand, uses an ordinary user device such as a smartphone or laptop, which may or may not comprise an inherent feature such as a circuit specifically designed and programmed to generate a secret. The user device has been designed, manufactured, and programmed in a country X, and if said circuit is present it may originate from a country Y. The ability of B's user device to generate a secret of sufficient randomness to be used by party B in communications depends on a number of factors, few or none of which can be checked or truly relied upon by any of parties A or B. Even if the manufacturer assures that their products conform with certain standards concerning randomness, there are industrial, commercial, and even government-level players who may have both the motivation and the means for slipping back doors into algorithms and hardware solutions that superficially seem to have been verified for secrecy.

**SUMMARY**

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an objective to provide methods and arrangements for ensuring secure digital communications between parties without having to rely upon randomness of unknown origin.

According to a first aspect, there is provided an arrangement for making a user device utilize a secret in cryptographically protected communications and/or cryptographic authentication of data. The arrangement comprises a communications part, a communications encrypter and decrypter part, a key generator, and a key storage. The communications part is configured to forward a secret received from a trusted external source to said key generator. Said key generator is configured to use said secret as a cryptographic seed to generate one or more keys and to store said one or more keys in said key storage. Said communications encrypter and decrypter part is configured to retrieve said one or more keys from said key storage and to use said one or more keys to cryptographically protect communications performed through said communications part.

According to an embodiment, the communications part is configured to establish a secure digital communications channel with a peer party and thereafter receive said secret through said secure digital communications channel. This involves at least the advantage that one can rely upon the trusted, high-entropy nature of secrets generated in an environment of the peer party and still achieve sufficient digital security in the arrangement.

According to an embodiment, the communications part is configured to use the Transport Layer Security, also referred to as TLS, standard to establish said secure digital communications channel. This involves at least the advantage that standardized and well-known methods can be used, without having to pose very specific requirements to the devices and software involved.

According to an embodiment, the communications part is configured to receive said secret through a different channel than that used for said cryptographically protected communications that are performed through said communications part when said communications encrypter and decrypter part has retrieved said one or more keys from said key storage. This involves at least the advantage that potential security risks involved in said latter channel can be avoided when receiving the secret.

According to an embodiment, said communications part is configured to use at least one of the following as said different channel: optical fibre communications, near field wireless communications, communications through a manually operated user interface. This involves at least the advantage that a sufficient difference to the other channel can be achieved, with associated increase in security.

According to an embodiment, the communications encrypter and decrypter part is configured to cryptographically verify immutability and integrity of said received secret before said secret is forwarded to said key generator. This involves at least the advantage that risks involved in possible man-in-the-middle attacks can be mitigated.

According to an embodiment, the communications encrypter and decrypter part is configured to perform said cryptographic verifying by performing at least one of the following: comparing a public key received in association with said secret with a separately obtained public key of the assumed sender of said secret; using a public key of the assumed sender of said secret to verify a digital signature received in association with said secret. This involves at least the advantage that the reliability of the verification can be evaluated based on knowledge of certain known methods.

According to an embodiment, the key generator is configured to perform at least one of the following to generate said one or more keys: use said secret as a seed to a key-generating algorithm, use said secret and a piece of information received from a user of the arrangement as input information to a key-generating algorithm. This involves at least the advantage that even if the secrecy of said secret would be compromised, there would still be a further obstacle to compromising the security of whatever the result of the key-generating algorithm is used for.

According to an embodiment, the arrangement is configured to permanently discard at least one of said one or more keys generated by the key generator after immediate use. This involves at least the advantage that unintended intermediate access by unauthorised parties to the data stored by the arrangement does not reveal the discarded key, as it will be re-generated every time only for immediate use and then again discarded.

According to a second aspect, there is provided a method for making a user device utilize a secret in at least one of: cryptographically protected communications, cryptographic authentication of data. The method comprises receiving a secret from a trusted external source and using said secret as a cryptographic seed to generate one or more keys. The method comprises storing said one or more keys for later use, and retrieving said one or more keys and using said one or more keys to cryptographically protect communications performed by said user device.

According to an embodiment, the method comprises establishing a secure digital communications channel with a peer party and thereafter receiving said secret through said secure digital communications channel. This involves at least the advantage that one can rely upon the trusted, high-entropy nature of secrets generated in an environment of the peer party and still achieve sufficient digital security in the arrangement.

According to an embodiment, the establishing of said secure digital communications channel comprises at least one of the following: using the Transport Layer Security, also referred to as TLS, standard to establish said secure digital communications channel; using optical fibre communications as said secure digital communications channel; using near field wireless communications as said secure digital communications channel; using communications through a manually operated user interface as said secure digital communications channel. This involves at least the advantage that standardized and well-known methods can be used, without having to pose very specific requirements to the devices and software involved.

According to an embodiment, the method comprises cryptographically verifying immutability and integrity of said received secret before said using of said secret as a cryptographic seed to generate one or more keys. This involves at least the advantage that risks involved in possible man-in-the-middle attacks can be mitigated.

According to an embodiment, said cryptographic verifying involves at least one of the following: comparing a public key received in association with said secret with a separately obtained public key of the assumed sender of said secret; using a public key of the assumed sender of said secret to verify a digital signature received in association with said secret. This involves at least the advantage that the reliability of the verification can be evaluated based on knowledge of certain known methods.

According to an embodiment, said generating of said one or more keys comprises at least one of the following: using said secret as a seed to a key-generating algorithm, using said secret and a piece of information received from a user of the arrangement as input information to a key-generating algorithm. This involves at least the advantage that even if the secrecy of said secret would be compromised, there would still be a further obstacle to compromising the security of whatever the result of the key-generating algorithm is used for.

According to an embodiment, the method comprises permanently discarding at least one of said generated one or more keys after immediate use. This involves at least the advantage that unintended intermediate access by unauthorised parties to the data stored by the arrangement does not reveal the discarded key, as it will be re-generated every time only for immediate use and then again discarded.

According to a third aspect, there is provided a computer program product comprising one or more sets of one or more machine-readable instructions that, when executed by one or more processors, cause the implementation of a method of a kind described above.

## BRIEF DESCRIPTION OF THE DRAWINGS

In the drawings:

**Figure 1** illustrates parts of two communicating arrangements,
**Figure 2** illustrates parts of two communicating arrangements,
**Figure 3** illustrates communications between two arrangements,
**Figure 4** illustrates actions performed by a trusted central arrangement,
**Figure 5** illustrates actions performed by a user device,
**Figure 6** illustrates an example of contents in a message,
**Figure 7** illustrates an example of generating keys,
**Figure 8** illustrates an example of generating keys, and
Figure 9 illustrates an example of generating keys.

## DETAILED DESCRIPTION

In the following description, reference is made to the accompanying drawings, which form part of the disclosure, and in which are shown, by way of illustration, specific aspects in which the present disclosure may be placed. It is understood that other aspects may be utilised, and structural or logical changes may be made without departing from the scope of the present disclosure. The following detailed description, therefore, is not to be taken in a limiting sense, as the scope of the present disclosure is defined be the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. On the other hand, for example, if a specific apparatus is described based on functional units, a corresponding method may include a step performing the described functionality, even if such step is not explicitly described or illustrated in the figures. Further, it is understood that the features of the various example aspects described herein may be combined with each other, unless specifically noted otherwise.

The following description uses the designations "trusted central arrangement" and "user device". Of these, the former refers to a computer device or an arrangement of interlinked computer devices that together constitute a trusted computing environment. This means that the constitution and operation of the trusted central arrangement are known and verifiable by a party who the involved parties consider trustworthy. Examples of a trusted central arrangement involve but are not limited to a computer system of a bank or governmental authority. Other designations that could be used in place of or in addition to "trusted central arrangement" are at least "trusted environment", "trusted server", and "wallet provider".

The user device is not necessarily a single device and/or not necessarily used by a single human user, although a most illustrative example of a user device meant here is a smartphone, tablet, or laptop computer of a user. In general, the user device is a device or an arrangement of interlinked devices that are to be used, among others, for secure, cryptographically protected digital communications with one or more trusted central arrangements. The constitution and operation of the user device meant here are not similarly known and verifiable as those of the trusted central arrangement, although it may be assumed that for said digital communications (and for services that rely upon said digital communications) the user device uses installed and/or downloadable application programs of known kind.

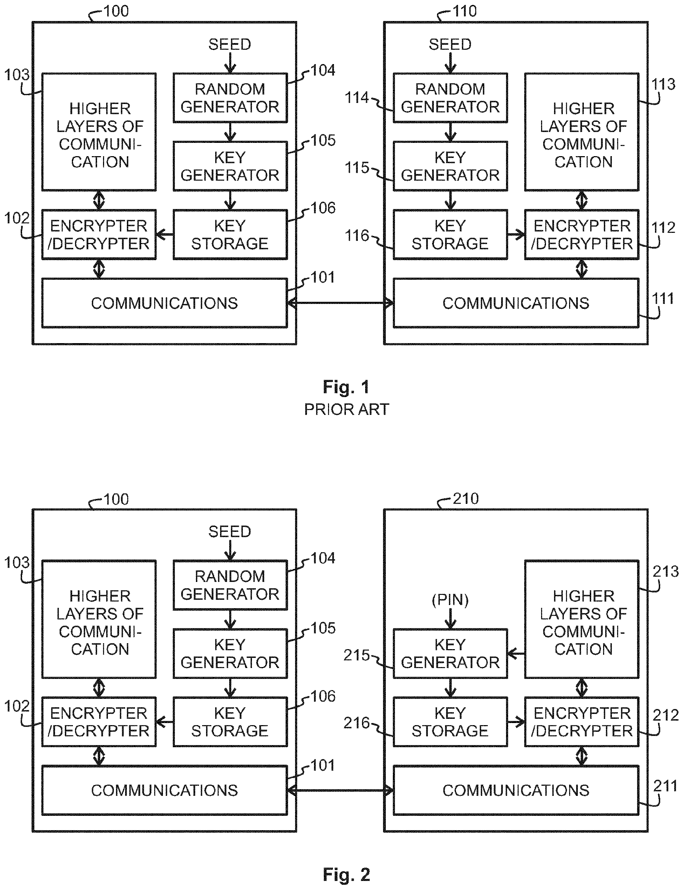

In fig. 1, the trusted central arrangement 100 comprises a communications transceiver 101, a cryptographic engine designated as an encrypter and decrypter part 102, as well as higher layers of communication 103. The last-mentioned is a general designation of all such services, applications, and protocol layers that may take advantage of the ability of the trusted central arrangement 100 to communicate with other devices and arrangements.

The trusted central arrangement 100 is capable of generating all the cryptoproducts and cryptographic elements it needs for cryptographically protected communications. It comprises a source of randomness, represented in fig. 1 as the random generator 104. For generating true randomness, it may use seed information such as environmental noise or the like. In a trusted server environment, it is customary to associate the generation of true randomness with the concept HSM, meaning Hardware Secure Module. It can be for example a specifically made circuit board or device in a computer room used by the trusted central arrangement. A piece of output from the random generator 104 is a random bit string, which a key generator 105 may use to generate one or more keys. The generated keys are kept in a key storage 106, from which the encrypter and decrypter part 102 may retrieve them as needed for performing encrypting, decrypting, digital signing, and other cryptographic operations needed for cryptographically protected communications.

In fig. 1, the user device 110 comprises essentially just counterparts for all corresponding parts of the trusted central arrangement: a communications transceiver 111, an encrypter and decrypter part 112, higher layers of communication 113, random generator 114, key generator 115, and key storage 116. These are coupled to each other and arranged to perform actions just like the corresponding parts of the trusted central arrangement 100, only in a smaller scale as the number of parties with which the user device 110 will need to conduct cryptographically protected communications is typically very much smaller than that of the trusted central arrangement 100.

The arrangement of fig. 1 involves the drawbacks that were analysed above in the description of prior art. Whether the random generator 114 in the user device can produce bit strings of good enough randomness cannot be known. Even more importantly, it cannot be known whether secrets produced in the user device can be trusted, as there is the possibility of so-called hidden back doors regarding both software and hardware. If such hidden back doors exist, it is not uncommon that they might be triggered into operation when the user device generates a random number, thus compromising the trustworthiness of whatever operation the generated random number would be used.

In fig. 2, the trusted central arrangement 100 has all the same parts as in fig. 1, although some of them may have been programmed to perform additional actions as will be described in more detail below. The user device 210 comprises a communications part 211, a communications encrypter and decrypter part 212, a key generator 215, and a key storage 216. Higher layers of communication in the user device 210 are represented by block 213. In line with the practice taken above, block 213 is a general designation of all such services, applications, and protocol layers that may take advantage of the ability of the user device 210 to communicate with other devices and arrangements.

Notably, the user device 210 does not need to comprise a random generator of its own for the purposes discussed here. One is naturally not excluded either, as user devices may utilize more or less random inputs for many other purposes. The communications part 211 is configured to forward a secret received from a trusted external source to the key generator 215. In the example embodiment shown in fig. 2, such forwarding takes place through the communications encrypter and decrypter part 212 and through some of the higher layers of communication in block 213, for reasons that become apparent in the more detailed description below. The key generator 215 is then configured to use such a forwarded secret as a cryptographic seed to generate one or more keys and to store them in the key storage 216. The communications encrypter and decrypter part 212 is configured to retrieve one or more keys from the key storage 216 and to use said one or more keys to cryptographically protect communications performed through the communications part 211.

The keys meant here may be for example encryption and/or signing keys of the user, for use in a PKI framework. Additionally or alternatively, the same principle can be used to generate and use keys of other kind, for example of a kind used in establishing a secure communications channel the security of which does not need to rely on manufacturer-specific features of the user device, and/or keys of a kind used for cryptographic authentication of data.

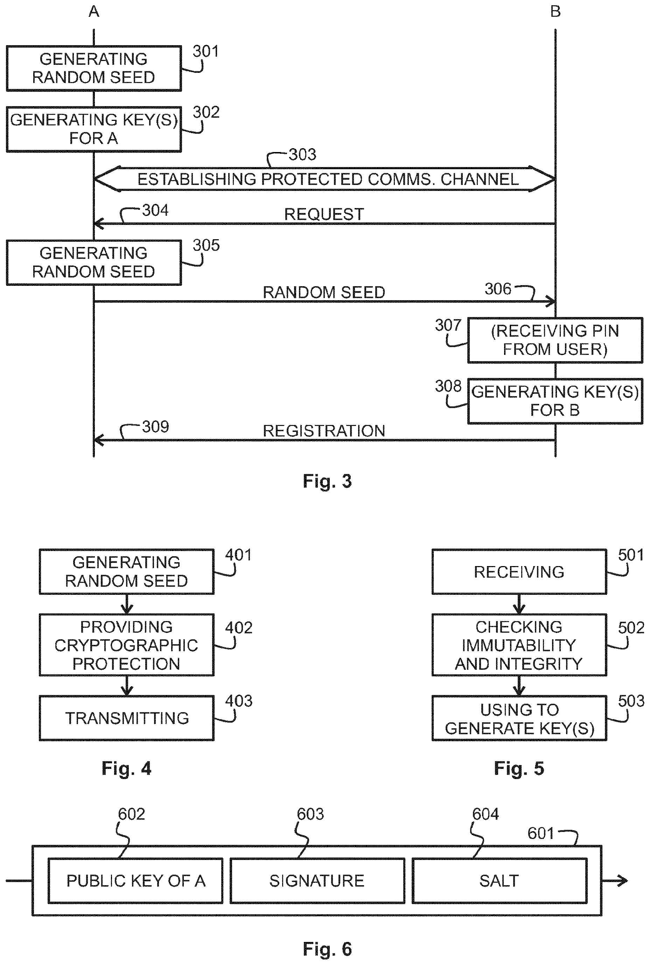

Not (necessarily) having the user device comprise a random generator relies upon the principle of providing the user device 210 with a secret, i.e. a piece of random information, from the trusted central arrangement 100. An example sequence of communications that utilize this principle is shown in fig. 3. The party marked as A on the left in fig. 3 represents the trusted central arrangement and the party marked as B on the right represents a user device.

Steps 301 and 302 are preparatory steps that the trusted central arrangement may take to prepare itself for the rest of the actions shown in fig. 3; they may have been performed very much earlier and they have only weak conceptual links to the other steps shown in fig. 3. In step 301, the trusted central arrangement generates a random seed, and in step 302 it utilizes the generated random seed to generate one or more keys for cryptographically protecting communications to be performed with user devices.

At step 303, the communications part in the user device B and a peer party in the trusted central arrangement A establish a secure digital communications channel. The concept of a peer party is used here to emphasize that while the trusted central arrangement may, at least in some embodiments, mean a large arrangement of interlinked computer devices that together constitute a trusted computing environment, only a limited portion of such an arrangement may be involved in the communications with an individual user device at a given time.

The way and mechanism for establishing the secure digital communications channel at step 303 are of lesser importance. As an example, the communications part in the user device and its peer party may be configured to use the Transport Layer Security or TSL standard to establish the secure digital communications channel. As another example, algorithms according to Quantum-Safe Cryptography (QSC) can be used. Said concept is under development at the time of writing this text, and can be alternatively referred to as Post-Quantum Cryptography (PQC) or Quantum-Resistant Cryptography (QRC). As another example, step 303 may involve bringing the user device close enough to a wireless communication means or connecting with a cable, such as a shielded electric cable or an optical fibre cable for example, for exchanging information over a short distance under circumstances that are considered secure enough, like under the supervision of an authorised official for example. As yet another example, step 303 may involve using optical fibre as quantum channel to establish an electrically controlled polarization system for encoding and decoding a secret by twin photon source. This fibre optic communication principle is used in quantum key transmission (QKD) and therefore it can be also used to transmit the secret seed or salt from the trusted computing environment, which is suitable as secure digital communications channel, because it is unbreakable by conventional methods.

In the case where the secure digital communications channel established at step 303 involves a secure TLS connection, it is advantageous to use a communication protocol that enables authentication of the parties. For example, when using the HTTPS protocol, the user device should log on to the trusted central arrangement using at least the basic Auth method. The more advanced OAuth2.x method is even more preferred, if trust has previously been established between the parties regarding the token information required for logging in to change. In connection with TLS, a certificate can also be used for authentication between parties, in which case there is no need for the user device to log in in the way described above. In such a case, the trusted central arrangement authenticates the user device with a certificate that is electronically signed by the trusted central arrangement itself or by another trusted entity. These alternatives may be generally described so that the communications part in the user device is configured to establish a secure digital communications channel with a peer party. The communications part is also configured to thereafter receive a secret through said secure digital communications channel.

At an optional step 304, the user device requests a random seed from the trusted central arrangement. This step is optional, because in some cases the communicating entities may have been programmed so that a request from the user device is not needed; the trusted central arrangement may commence the transmission of a secret to the user device of its own motion.

At step 305, the trusted central arrangement generates a secret for later use by the user device. In fig. 3 the secret is called the random seed. For generating the secret at step 305, the trusted central arrangement utilizes its certified capabilities so that the generated secret fulfils the criteria of true randomness. It must be noted that the order of method steps shown in fig. 3 is not obligatory: for example, the trusted central arrangement may have actually generated the secret in question already much earlier.

At step 306, the user device receives the secret from the trusted central arrangement. As was already mentioned above, the communications part of the user device may be configured to receive the secret through the same channel that it will later use for cryptographically protected communications (for the cryptographic protection of which the secret will then be used). As an alternative, the communications part may be configured to receive said secret through a different channel than that used for said cryptographically protected communications that are performed through said communications part later. Examples of such different channels include but are not limited to near field wireless communications and communications through a manually operated user interface such as a keypad or touch-sensitive display.

At step 308, a key generator in the user device uses the received secret as a cryptographic seed to generate one or more keys. Preferably, this or these are keys of a PKI framework. At least one of the generated one or more keys may be stored in a key storage of the user device. However, according to an advantageous embodiment, the key storage of the user is not used to store any secret key of the user, but the act of generating such a secret key is performed again each time when the secret key is needed. As illustrated by the optional step 307 in fig. 3, the generation of key(s) at step 308 may be preceded by the reception of a PIN code or a corresponding personal, non-stored piece of information from the user. Examples of how the received secret can be used as a cryptographic seed to generate keys, possibly together with a PIN code or the like, are described in more detail later in this text.

As the generated key(s) may be used for communications, it may be further assumed that a communications encrypter and decrypter part of the user device is configured to retrieve one or more of said keys from said key storage (or directly from the key generation step) and to use said one or more keys to cryptographically protect communications performed through a communications part of the user device. As a part of such communications, there is shown a registration step 309 in fig. 3. The user device may for example ask the trusted central arrangement to store in its databases a public key which the user device has generated using the previously transmitted secret as a cryptographic seed. In typical PKI frameworks, public key(s) like the signing key (in DSA) or public encryption keys (in ECC and RSA) are stored (possibly in signed form, like in DSA) in a database and/or in user certificates in key storages of the user devices.

In those embodiments in which the act of generating a secret key is performed again each time when the secret key is needed, the concepts of storing such a secret key and retrieving it for later use may be understood so that at the moment when the instantly generated secret key is available for use, it becomes "stored" in the sense that it exists in a digital register or the like for a short time. When the communications encrypter and decrypter part then uses it to cryptographically protect communications, it "retrieves" the secret key from said digital register or the like. In other words, the "storing for later use" and "retrieving and using" cycle may be very short in time, after which the secret key is permanently discarded from memory and only re-generated at a later instant if it is needed again.

Fig. 4 illustrates an example of sub-steps that may be involved in step 305 of fig. 3, i.e. when the trusted central arrangement prepares to provide the requested secret to the user device. Step 401 represents the actual generating of the requested secret. At step 402, the trusted central arrangement provides cryptographic protection for the secret to be transmitted to the user device.

The secret can be cryptographically protected at step 402 with or without a direct association to the secure digital communications channel established at step 303 of fig. 3. If a trust has already been established between the trusted central arrangement and the user device, sharing of an asymmetric or symmetric encryption key is thus enabled between the parties. As an example of a symmetric encryption key, the trusted central arrangement and the user device can have a previously transferred single-use encryption key according to the PSK (Pre-Shared Key) model, which key the trusted central arrangement may then use at step 402 to protect the secret with a block or queue cipher such as AES256-CTR or ChaCha20 algorithms. As an example of an asymmetric encryption key, the trusted central arrangement and the user device may have previously transferred each other's public ECC keys, such as those generated with the Curve25519 algorithm. Between such keys the parties can calculate a common secret, which may then be used as such. Alternatively, an encryption key may be produced from it by distributing, to protect randomness with corresponding block or queue ciphers.

In order to transfer the secret between the trusted central arrangement and the user device safely, so that its confidentiality is not compromised, it is recommendable to try to make use of several security layers. If it is not possible to implement reliable encryption between the trusted central arrangement and the user device, then the secret may be digitally signed with the secret signature key of the trusted central arrangement, so that its recipient can be sure of its immutability by checking it using the corresponding public signature key of the trusted central arrangement. As an example of such an embodiment, it is cost-effective and relatively safe to use the EdDSA electronic signature method, which is based on the Ed25519 algorithm. It is also recommendable for the recipient to check that the signature of the secret is valid, i.e. that the correct trusted central arrangement has verifiably signed the secret. This check can be made by using a public signing key of the trusted central arrangement.

Step 403 in fig. 4 represents the trusted central arrangement performing the act(s) of transmitting the cryptographically protected secret towards the user device. Depending on the selected method of communications, the transmitting may involve making the transmission in one or more parts.

Fig. 5 illustrates an example of sub-steps that may be involved in step 308 of fig. 3, i.e. when the user device uses the received secret as a cryptographic seed to generate one or more keys and to store said one or more keys in a key storage. Again, it is to be noted that preferably, no secret key is ever stored in a key storage of the user device but is generated again, preferably utilizing a specifically received PIN code or the like, every time they are needed. Thus, what is said here about storing one or more keys in the key storage is mostly applicable to storing public keys and/or signed certificates that involve such public keys.

Step 501 represents the user device performing the act(s) of receiving the transmission(s) containing the secret. As pointed out above, these acts may mean receiving digital information in the form of modulated carrier waves over a wired or wireless communications channel. Additionally or alternatively, these acts may mean other ways of receiving like optically reading a QR code or other optically readable information or receiving information through a manually operated user interface.

In fig. 4 it was assumed that the trusted central arrangement used one or more methods for cryptographically protecting the secret before transmitting. Correspondingly, fig. 502 in fig. 5 represents the user device cryptographically verifying the immutability and integrity of the received secret before the secret is forwarded to a key generator. The exact methods to be used for such verifying are essentially the known counterparts of the methods that the trusted central arrangement used in step 402, examples of which were described above. Some further advantageous features are described in the following with reference to fig. 6. It may be noted that in preferable embodiments, in which the user device uses the https protocol to login to the trusted central arrangement, as login information it can use either a user identifier and a password or a client certificate. In both cases, such identification information has been configured into the user device in a service-specific manner.

Fig. 6 illustrates schematically a piece 601 of digitally transmitted information. Sub-parts thereof are the public (signing) key of the trusted central arrangement shown as block 602, the signature of the secret shown as block 603, and the secret itself shown as block 604 and designated as "SALT". The whole piece 601 of digitally transmitted information may be further encrypted for transmission, for example by using a public key of the intended recipient, so that successful decrypting requires knowledge of the corresponding secret key.

The trusted central arrangement may have used the Ed25519 algorithm for generating a secret signing key and a corresponding public signing key. After having generated the secret 604, the trusted central arrangement may compose the piece 601 of digitally transmitted information by putting together the generated secret 604, the signature 603 it has calculated from it using the secret signing key, and the public signing key 602. It may be noted that the trusted central arrangement does not need its own public signing key 602 in the signing process, as it uses its secret signing key for signing the information to be signed. In this suggested embodiment, the public signing key 602 of the trusted central arrangement is included in the transmitted information for convenience, so that it becomes transmitted together with the signed information and the user device does not need to obtain it separately.

When the user device then receives the piece 601 of digitally transmitted information, it first decrypts any outer layers of encryption and retrieves the public key 602, the signature 603, and the secret 604. If the public key 602 is the same as a public key which the user device knows from other sources to belong to the trusted central arrangement, the acts of cryptographic verifying in step 502 may involve a simple check by comparing the public key 602 received in association with the secret 604 with such a separately obtained public key of the assumed sender of said secret. As a more thorough check, the user device may use the public key of the assumed sender of the secret to verify the digital signature 603 received in association with the secret 604. It may input the decrypted contents of the received piece 601 of digitally transmitted information to the corresponding Ed25519 algorithm, which gives a positive result only if this particular secret was, immutable and whole, the one that the trusted central arrangement originally generated and signed with its secret signing key.

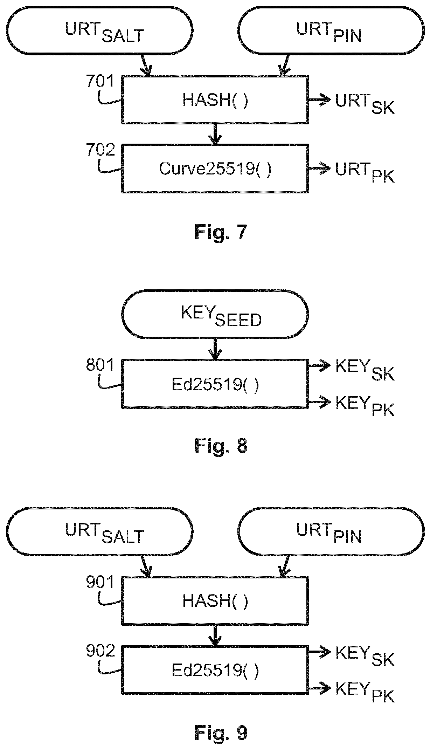

Referring back to fig. 5, after having ensured that it has received the secret in its correct, original form, the user device uses the secret as a cryptographic seed to generate one or more keys and to store said one or more keys in its key storage at step 503. Figs. 7 and 8 illustrate two more detailed examples of how the generation of key(s) may take place.

In fig. 7, the secret that the user device received from the trusted central arrangement is designated the $URT_{SALT}$. The method of fig. 7 involves using said secret and a piece of information received from a user as input information to a key-generating algorithm. The piece of information received from the user is designated $URT_{PIN}$ in fig. 7, and it may be for example a short PIN code that the user inputs using a keypad or a touch-sensitive display. At step 701, the key generator of the user device uses a hashing algorithm to produce a secret key $URT_{SK}$ as follows:

$$URT_{SK} = Hash(URT_{PIN}, URT_{SALT}).$$

An example of a hashing algorithm that can be used this way is the Argon2 algorithm, which is commonly known and widely used on the technical field of digital cryptography. At step 702, the key generator of the user device uses the Curve25519 algorithm to produce a public key $URT_{PK}$ as follows:

$$URT_{PK} = Curve25519(URT_{SK})$$
$$= Curve25519(Hash(URT_{PIN}, URT_{SALT})).$$

Both generated keys $URT_{SK}$ and $URT_{PK}$ can be stored in a key storage of the user device and used to cryptographically protect communications performed through the communications part of the user device. However, as noted earlier already, it is preferable not to keep the secret key $URT_{SK}$ stored for any longer than what is needed for its immediate use.

Fig. 8 illustrates a somewhat simpler method in which the key generator of the user device uses only the received secret (and no additional information received from the user) as a seed to a key-generating algorithm. In fig. 8 the received secret is designated as $KEY_{SEED}$. At step 801, the key generator of the user device uses the Ed25519 algorithm to produce secret and public signing keys $KEY_{SK}$ and $KEY_{PK}$ as follows:

$$KEY_{SK}, KEY_{PK} = Ed25519(KEY_{SEED}).$$

An alternative way could be the one shown in the steps 901 and 902 of fig. 9, which represent producing secret and public keys $KEY_{SK}$ and $KEY_{PK}$ as follows:

$$KEY_{SK}, KEY_{PK} = Ed25519(Hash(URT_{PIN}, URT_{SALT})).$$

In a yet simpler embodiment, the user device might use the received secret (or a part thereof) as such as a cryptographic key. Therefore, the previously defined act(s) of the key generator for using the received secret as a cryptographic seed to generate one or more keys should be construed widely so that using the secret or a part thereof is only one way of using said secret as a cryptographic seed to generate one or more keys.

The presented method of delivering trusted randomness allows all devices that are (cap) able to communicate with a trusted central arrangement to obtain randomness of high quality and, consequently, to implement secure cryptography. This technology enables, for example, users to use various e-commerce services utilizing their already existing devices that do not include a secure environment for the implementation of high-quality cryptographic functions. In addition, new types of consumer products can also be developed that are capable of secure electronic transactions with even the simplest computing unit, e.g. wearable devices or clothing. This solution ensures that an outside party cannot manipulate the randomness from which the secret information is derived. In addition, this technology can ensure a very high level of security of the information subject to confidentiality when utilizing such cryptographic algorithms that are able to utilize the full entropy of the randomness in deriving the secret and thus theoretically resist attacks by even the most powerful of future quantum computers.

Any range or device value given herein may be extended or altered without losing the effect sought. Also any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought. What is explained in this text about methods is directly applicable to computer program products that consist of machine-readable instructions that, when executed by one or more processors, cause the implementation of a method of a kind described.

The term 'comprising' is used herein to mean including the method, blocks or elements identified, but such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the spirit or scope of this specification.

**Claims**

1. An arrangement for making a user device utilize a secret in at least one of: cryptographically protected communications, cryptographic authentication of data, the arrangement comprising:

   - a communications part,
   - a communications encrypter and decrypter part,
   - a key generator, and
   - a key storage;

   **wherein** said communications part is configured to forward a secret received from a trusted external source to said key generator,

   **and wherein** said key generator is configured to use said secret as a cryptographic seed to generate one or more keys and to store said one or more keys in said key storage,

   **and wherein** said communications encrypter and decrypter part is configured to retrieve said one or more keys from said key storage and to use said one or more keys to cryptographically protect communications performed through said communications part.

2. An arrangement according to claim 1,
   wherein:

   - the communications part is configured to establish a secure digital communications channel with a peer party and thereafter receive said secret through said secure digital communications channel.

3. An arrangement according to claim 2,
   wherein the communications part is configured to use the Transport Layer Security, also referred to as TLS, standard to establish said secure digital communications channel.

4. An arrangement according to any of the preceding claims, wherein the communications part is configured to receive said secret through a different channel than that used for said cryptographically protected communications that are performed through said communications part when said communications encrypter and decrypter part has retrieved said one or more keys from said key storage.

5. An arrangement according to claim 4,
   wherein said communications part is configured to use at least one of the following as said different channel: cable or optical fibre communications, near field wireless communications, communications through a manually operated user interface.

6. An arrangement according to any of the preceding claims, wherein the communications encrypter and decrypter part is configured to cryptographically verify immutability and integrity of said received secret before said secret is forwarded to said key generator.

7. An arrangement according to claim 6,
   wherein the communications encrypter and decrypter part is configured to perform said cryptographic verifying by performing at least one of the following:

   - comparing a public key received in association with said secret with a separately obtained public key of the assumed sender of said secret,
   - using a public key of the assumed sender of said secret to verify a digital signature received in association with said secret.

8. An arrangement according to any of the preceding claims, wherein the key generator is configured to perform at least one of the following to generate said one or more keys:

   - use said secret as a seed to a key-generating algorithm,
   - use said secret and a piece of information received from a user of the arrangement as input information to a key-generating algorithm.

9. An arrangement according to claim 8, wherein the arrangement is configured to permanently discard at least one of said one or more keys generated by the key generator after immediate use.

10. A method for making a user device utilize a secret in at least one of: cryptographically protected communications, cryptographic authentication of data, the method comprising:

   - receiving a secret from a trusted external source,
   - using said secret as a cryptographic seed to generate one or more keys,
   - storing said one or more keys for later use, and
   - retrieving said one or more keys and using said one or more keys to cryptographically protect communications performed by said user device.

11. A method according to claim 10, comprising:

   - establishing a secure digital communications channel with a peer party and
   - thereafter receiving said secret through said secure digital communications channel.

**12.** A method according to claim 11, wherein the establishing of said secure digital communications channel comprises at least one of the following:

- using the Transport Layer Security, also referred to as TLS, standard to establish said secure digital communications channel
- using cable or optical fibre communications as said secure digital communications channel,
- using near field wireless communications as said secure digital communications channel,
- using communications through a manually operated user interface as said secure digital communications channel.

**13.** A method according to any of claims 10 to 12, comprising:

- cryptographically verifying immutability and integrity of said received secret before said using of said secret as a cryptographic seed to generate one or more keys.

**14.** A method according to claim 13, wherein said cryptographic verifying involves at least one of the following:

- comparing a public key received in association with said secret with a separately obtained public key of the assumed sender of said secret,
- using a public key of the assumed sender of said secret to verify a digital signature received in association with said secret.

**15.** A method according to any of claims 10 to 14, wherein said generating of said one or more keys comprises at least one of the following:

- using said secret as a seed to a key-generating algorithm,
- using said secret and a piece of information received from a user of the arrangement as input information to a key-generating algorithm.

**16.** A method according to claim 15, comprising permanently discarding at least one of said generated one or more keys after immediate use.

**17.** A computer program product comprising one or more sets of one or more machine-readable instructions that, when executed by one or more processors, cause the implementation of a method according to any of claims 10 to 16.

**Amended claims in accordance with Rule 137(2) EPC.**

**1.** An arrangement for making a user device (210) utilize a secret in at least one of: cryptographically protected communications, cryptographic authentication of data, the arrangement comprising:

- a communications part (211),
- a communications encrypter and decrypter part (212),
- a key generator (215), and
- a key storage (216);
**wherein** said communications part (211) is configured to forward a secret received from a trusted external source (100) to said key generator (215),
**and wherein** said key generator (215) is configured to use said secret as a cryptographic seed to generate one or more keys and to store said one or more keys in said key storage (216),
**and wherein** said communications encrypter and decrypter part (212) is configured to:

- cryptographically verify immutability and integrity of said received secret before said secret is forwarded to said key generator, using a public key of an assumed sender of said secret to verify a digital signature received in association with said secret, and
- retrieve said one or more keys from said key storage (216) and to use said one or more keys to cryptographically protect communications performed through said communications part (211).

**2.** An arrangement according to claim 1, wherein:

- the communications part is configured to establish a secure digital communications channel with a peer party and thereafter receive said secret through said secure digital communications channel, thus making said peer party appear as said trusted external source.

3. An arrangement according to claim 2,
wherein the communications part is configured to use the Transport Layer Security, also referred to as TLS, standard to establish said secure digital communications channel.

4. An arrangement according to any of the preceding claims, wherein the communications part is configured to receive said secret through a different channel than that used for said cryptographically protected communications that are performed through said communications part when said communications encrypter and decrypter part has retrieved said one or more keys from said key storage.

5. An arrangement according to claim 4,
wherein said communications part is configured to use at least one of the following as said different channel: cable or optical fibre communications, near field wireless communications, communications through a manually operated user interface.

6. An arrangement according to any of the preceding claims, wherein the communications encrypter and decrypter part is configured to perform said cryptographic verifying by comparing a public key received in association with said secret with a separately obtained public key of the assumed sender of said secret.

7. An arrangement according to any of the preceding claims, wherein the key generator is configured to perform at least one of the following to generate said one or more keys:

- use said secret as a seed to a key-generating algorithm,
- use said secret and a piece of information received from a user of the arrangement as input information to a key-generating algorithm.

8. An arrangement according to claim 7,
wherein the arrangement is configured to permanently discard at least one of said one or more keys generated by the key generator after immediate use.

9. A method for making a user device utilize a secret in at least one of: cryptographically protected communications, cryptographic authentication of data, the method comprising the user device performing the following steps:

- receiving a secret from a trusted source external to said user device,
- cryptographically verifying immutability and integrity of said received secret, wherein said cryptographic verifying involves using a public key of an assumed sender of said secret to verify a digital signature received in association with said secret,
- after said cryptographic verifying, using said secret as a cryptographic seed to generate one or more keys,
- storing said one or more keys for later use, and
- retrieving said one or more keys and using said one or more keys to cryptographically protect communications performed by said user device.

10. A method according to claim 9, comprising:

- establishing a secure digital communications channel with a peer party and
- thereafter receiving said secret through said secure digital communications channel, thus making said peer party appear as said trusted external source.

11. A method according to claim 10, wherein the establishing of said secure digital communications channel comprises at least one of the following:

- using the Transport Layer Security, also referred to as TLS, standard to establish said secure digital communications channel
- using cable or optical fibre communications as said secure digital communications channel,
- using near field wireless communications as said secure digital communications channel,

- using communications through a manually operated user interface as said secure digital communications channel.

12. A method according to any of claims 9 to 11, wherein said cryptographic verifying involves comparing a public key received in association with said secret with a separately obtained public key of the assumed sender of said secret.

13. A method according to any of claims 9 to 12, wherein said generating of said one or more keys comprises at least one of the following:

- using said secret as a seed to a key-generating algorithm,
- using said secret and a piece of information received from a user of the arrangement as input information to a key-generating algorithm.

14. A method according to claim 13, comprising permanently discarding at least one of said generated one or more keys after immediate use.

15. A computer program product comprising one or more sets of one or more machine-readable instructions that, when executed by one or more processors, cause the implementation of a method according to any of claims 9 to 14.

**Fig. 1**

PRIOR ART

**Fig. 2**

A                                                                                                          B

GENERATING
RANDOM SEED        301

GENERATING KEY(S)    302
FOR A

303
ESTABLISHING PROTECTED COMMS. CHANNEL

304                    REQUEST

GENERATING           305
RANDOM SEED

RANDOM SEED           306

307    (RECEIVING PIN
FROM USER)

308    GENERATING KEY(S)
FOR B

309                 REGISTRATION

**Fig. 3**

GENERATING           401
RANDOM SEED

PROVIDING            402
CRYPTOGRAPHIC
PROTECTION

TRANSMITTING         403

**Fig. 4**

RECEIVING            501

CHECKING             502
IMMUTABILITY
AND INTEGRITY

USING TO             503
GENERATE KEY(S)

**Fig. 5**

602              603              604              601

PUBLIC KEY OF A     SIGNATURE         SALT

**Fig. 6**

15

URT$_{SALT}$  URT$_{PIN}$

701 HASH( ) → URT$_{SK}$

702 Curve25519( ) → URT$_{PK}$

**Fig. 7**

KEY$_{SEED}$

801 Ed25519( ) → KEY$_{SK}$ → KEY$_{PK}$

**Fig. 8**

URT$_{SALT}$  URT$_{PIN}$

901 HASH( )

902 Ed25519( ) → KEY$_{SK}$ → KEY$_{PK}$

**Fig. 9**

Europäisches
Patentamt

European
Patent Office

Office européen
des brevets

## EUROPEAN SEARCH REPORT

**Application Number**

**EP 23 15 1546**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/026950 A1 (WASIQ MUHAMMAD [CA] ET AL) 25 January 2018 (2018-01-25) * paragraph [0022] * * paragraph [0030] * * paragraph [0033] – paragraph [0042] * * paragraph [0076] – paragraph [0077] * * figure 4 * | 1-17 | INV. H04L9/08 H04L9/14 |
| X | US 2022/070666 A1 (HUA XUANDONG [US] ET AL) 3 March 2022 (2022-03-03) * paragraph [0120] – paragraph [0125] * * figure 8 * | 1-17 | |
| X | US 10 963 593 B1 (CAMPAGNA MATTHEW JOHN [US] ET AL) 30 March 2021 (2021-03-30) * column 2, line 63 – column 7, line 44 * * figures 1, 2, 5 * | 1-17 | |
| A | US 2019/253402 A1 (KÄRKKÄINEN TUOMAS [FI] ET AL) 15 August 2019 (2019-08-15) * paragraph [0017] – paragraph [0020] * * paragraph [0059] – paragraph [0060] * | 1-17 | TECHNICAL FIELDS SEARCHED (IPC) H04L |

The present search report has been drawn up for all claims

| Place of search | Date of completion of the search | Examiner |
|---|---|---|
| Munich | 2 June 2023 | Apostolescu, Radu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

**EP 23 15 1546**

This annex lists the patent family members relating to the patent documents cited in the above-mentioned European search report.
The members are as contained in the European Patent Office EDP file on
The European Patent Office is in no way liable for these particulars which are merely given for the purpose of information.

**02-06-2023**

| Patent document cited in search report | | | Publication date | Patent family member(s) | | | Publication date |
|---|---|---|---|---|---|---|---|
| US 2018026950 | A1 | | 25-01-2018 | US | 9781081 | B1 | 03-10-2017 |
| | | | | US | 2018026950 | A1 | 25-01-2018 |
| US 2022070666 | A1 | | 03-03-2022 | AU | 2021333936 | A1 | 05-01-2023 |
| | | | | CA | 3181818 | A1 | 03-03-2022 |
| | | | | CN | 116097232 | A | 09-05-2023 |
| | | | | US | 2022070666 | A1 | 03-03-2022 |
| | | | | WO | 2022047411 | A1 | 03-03-2022 |
| US 10963593 | B1 | | 30-03-2021 | NONE | | | |
| US 2019253402 | A1 | | 15-08-2019 | CN | 109716725 | A | 03-05-2019 |
| | | | | EP | 3513539 | A1 | 24-07-2019 |
| | | | | GB | 2554082 | A | 28-03-2018 |
| | | | | RU | 2713604 | C1 | 05-02-2020 |
| | | | | US | 2019253402 | A1 | 15-08-2019 |
| | | | | WO | 2018050293 | A1 | 22-03-2018 |

EPO FORM P0459

For more details about this annex : see Official Journal of the European Patent Office, No. 12/82